# EUROPÄISCHE PATENTANMELDUNG

(11) **EP 2 145 527 A2**
(43) Veröffentlichungstag der Anmeldung: **20.01.2010**
(21) Anmeldenummer: 09007030.1
(22) Anmeldetag: 27.05.2009
(51) Int. Cl.: A01D 69/03, A01D 43/08

(54) **Antriebsanordnung für eine landwirtschaftliche Arbeitsmaschine**

(30) Priorität: 18.07.2008 DE 102008033918
(71) Anmelder: GKN Walterscheid GmbH, 53797 Lohmar (DE)
(72) Erfinder: Rauschenbach, Stefan, 02692 Großpostwitz (DE); Roth, Andreas, 53819 Neunkirchen-Seelscheid (DE); Sterzel, Maik, 02627 Kubschütz (DE)
(74) Vertreter: Müller, Thomas Michael

(57) **Zusammenfassung**

Antriebsanordnung für eine landwirtschaftliche Arbeitsmaschine, insbesondere für einen Feldhäcksler, umfassend
ein Motorabtriebsgetriebe 3, das antriebsseitig mit zumindest einem Antriebsmotor 1 verbindbar ist,
mindestens eine erste Hydropumpe 8, 8' zum Speisen von zumindest einem Hydromotor 14, 17 zum Antreiben von Arbeitsorganen der Arbeitsmaschine,
eine Riemenscheibe 4 eines Riementriebs 5, insbesondere zum Antreiben einer Häckseltrommel 10, sowie
eine Schaltkupplung 7 mit einem eingangsseitigen ersten Kupplungselement 36 und einem ausgangsseitigen zweiten Kupplungselement 37,
wobei das erste Kupplungselement 36 mit dem Motorabtriebsgetriebe 3 und das zweite Kupplungselement 37 mit der Riemenscheibe 4 antriebsverbunden ist und
wobei das zweite Kupplungselement 37 ferner mit einer Antriebswelle 38 zum Antreiben der zumindest einen ersten Hydropumpe 8, 8' drehfest verbunden ist.

## Beschreibung

Die Erfindung betrifft eine Antriebsanordnung für eine landwirtschaftliche Arbeitsmaschine, insbesondere für einen Feldhäcksler, wobei die Antriebsanordnung zum Antreiben eines Hauptaggregats, insbesondere einer Häckseltrommel, sowie von Arbeitsorganen, wie zum Beispiel einem Vorsatzgerät und/oder einer Einzugseinheit, dient.

Aus der DE 10 2006 030 971 A1 ist eine Antriebsanordnung für einen Feldhäcksler bekannt. In Fahrtrichtung betrachtet vorne weist der Feldhäcksler ein Schneidwerk zum Schneiden des Ernteguts, wie zum Beispiel Gras oder Mais, auf. Ein sich an das Schneidwerk anschließendes Vorsatzgerät dient zur Aufnahme des Ernteguts und führt dieses zentral zusammen, wo es durch einen Einzug mit einer Walzeneinheit zu einer Häckseltrommel geleitet wird. Die Häckseltrommel dient zum Zerkleinern des Ernteguts. An die Häckseltrommel schließt sich ein Aufbereiter zum Aufbrechen von Körnern an, der das Erntegut an einen Nachbeschleuniger weiterleitet, wobei der Nachbeschleuniger das Erntegut durch einen Auswurfkanal nach außen fördert, so dass das Erntegut an ein Ladefahrzeug übergeben werden kann.

Die Antriebsanordnung des Feldhäckslers umfasst einen Antriebsmotor, der mit einem Motorabtriebsgetriebe antriebsverbunden ist. Das Motorabtriebsgetriebe dient zum Antreiben einer Riemenscheibe eines Riementriebs, über den die Häckseltrommel angetrieben wird. Mittels des Riementriebs wird neben der Häckseltrommel auch eine Hydropumpe angetrieben, die zum Antreiben eines Hydromotors dient, wobei mittels des Hydromotors die Walzeneinheit des Einzugs angetrieben wird. Darüber hinaus ist die Häckseltrommel mit einem weiteren Riementrieb zum Antreiben des Vorsatzgeräts verbunden.

Aufgabe der vorliegenden Erfindung ist es, eine Antriebseinheit zum Antreiben eines Hauptaggregats und zumindest eines weiteren Arbeitsorgans, insbesondere für einen Feldhäcksler, bereitzustellen, die einen kompakten Aufbau aufweist.

Die Aufgabe wird erfindungsgemäß durch eine Antriebsanordnung für eine landwirtschaftliche Arbeitsmaschine, insbesondere für einen Feldhäcksler, umfassend
ein Motorabtriebsgetriebe, das antriebsseitig mit zumindest einem Antriebsmotor verbindbar ist,
mindestens eine erste Hydropumpe zum Speisen von zumindest einem Hydromotor zum Antreiben von Arbeitsorganen der Arbeitsmaschine,
eine Riemenscheibe eines Riementriebs, insbesondere zum Antreiben einer Häckseltrommel, sowie
eine Schaltkupplung mit einem eingangsseitigen ersten Kupplungselement und einem ausgangsseitigen zweiten Kupplungselement,
wobei das erste Kupplungselement mit dem Motorabtriebsgetriebe und das zweite Kupplungselement mit der Riemenscheibe antriebsverbunden ist und
wobei das zweite Kupplungselement ferner mit einer Antriebswelle zum Antreiben der zumindest einen ersten Hydropumpe drehfest verbunden ist, gelöst.

Dadurch, dass das zweite Kupplungselement mit der Antriebswelle zum Antreiben der zumindest einen ersten Hydropumpe drehfest verbunden ist, ist sichergestellt, dass die erste Hydropumpe ohne Zwischenschaltung eines Riementriebs unmittelbar vom Motorabtriebsgetriebe angetrieben wird. Somit kann die erste Hydropumpe in unmittelbarer Nähe zum Motorabtriebsgetriebe angeordnet werden und muss nicht im Bereich des Riementriebs vorgesehen sein, wo im allgemeinen beengte Platzverhältnisse herrschen. Zudem wird der Verschleiß am Riementrieb vermindert, da dieser die erste Hydropumpe nicht antreibt.

Dadurch, dass die erste Hydropumpe vom zweiten Kupplungselement der Schaltkupplung angetrieben wird, wird beim Abschalten der Schaltkupplungen und somit beim Abschalten des Riementriebs auch die erste Hydropumpe nicht mehr angetrieben, wodurch im Vergleich zu Lösungen mit ständig vom Antriebsmotor angetriebenen Hydropumpen ein geringerer Energiebedarf bei Nichtnutzung der Häckseleinheit erzielt wird. Bei abgeschaltetem Riementrieb wird zudem der Riementrieb bzw. die Häckseltrommel über die leer mitlaufende erste Hydropumpe und den leer mitlaufenden ersten Hydromotor abgebremst. Um diesen Effekt zu verstärken, kann die hydraulische Verbindung zwischen der ersten Hydropumpe und dem ersten Hydromotor unterbrochen werden, so dass die Häckseltrommel gegen die Kraft des ersten Hydromotors abgebremst werden kann. Dies kann auch dadurch erzielt werden, dass der erste Hydromotor hydraulisch kurzgeschlossen wird.

Zum Antriebsverbinden des Motorabtriebsgetriebes weist dieses eine Abtriebswelle auf, die mit dem ersten Kupplungsteil fest verbunden ist.

Das zweite Kupplungselement kann unmittelbar drehfest mit der Riemenscheibe verbunden sein. Hierbei ist es möglich, dass die Antriebswelle zum Antreiben der ersten Hydropumpe unmittelbar mit der Riemenscheibe verbunden ist. Die Antriebswelle kann hierbei mittels einer Zahnradstufe mit der Hydropumpe verbunden sein.

Zum Verbinden der zumindest einen ersten Hydropumpe mit dem zumindest einen Hydromotor ist eine Steuerventileinheit vorgesehen, über die unterschiedliche Schaltstellungen erzielt werden können, um zum Beispiel, wie bereits erwähnt, die Häckseltrommel gegen die erste Hydropumpe abbremsen zu können.

Vorzugsweise ist vorgesehen, dass die Antriebsanordnung zumindest eine zweite Hydropumpe umfasst, die über die Steuerventilanordnung mit der zumindest einen ersten Hydropumpe verbunden ist, wobei in einer ersten Schaltstellung der Steuerventilanordnung und bei geschlossener Schaltkupplung die erste Hydropumpe und die zweite Hydropumpe hydraulisch voneinander getrennt sind und die erste Hydropumpe und die Riemenscheibe vom zumindest einen Antriebsmotor in einer Hauptdrehrichtung angetrieben werden und
wobei in einer zweiten Schaltstellung der Steuerventilanordnung und bei geöffneter Schaltkupplung die zumindest eine erste Hydropumpe derart mit der zumindest einen zweiten Hydropumpe hydraulisch verbunden ist, dass die zumindest eine erste Hydropumpe als Hydraulikmotor zum Antreiben des Riementriebs betrieben wird und von der zumindest einen zweiten Hydropumpe in einer zur Hauptdrehrichtung entgegen gesetzten Drehrichtung angetrieben wird.

Bei dieser Anordnung wird die erste Hydropumpe je nach Schaltstellung der Schaltventilanordnung als Hydraulikpumpe oder Hydraulikmotor betrieben. Bei normalem Antrieb der Häckseltrommel wird die erste Hydropumpe als Hydraulikpumpe verwendet, um die weiteren Arbeitsorgane, zum Beispiel das Vorsatzgerät oder den Einzug, hydraulisch anzutreiben. Es gibt jedoch Einsatzfälle, in denen es gewünscht sein kann, die Häckseltrommel rückwärts zu betreiben. Hierzu dient eine zweite Hydropumpe, die über das Motorabtriebsgetriebe vom Antriebsmotor angetrieben wird. Über die Steuerventileinheit wird die hydraulische Verbindung zwischen der ersten Hydropumpe und dem ersten Hydromotor unterbrochen und dafür eine hydraulische Verbindung zwischen der ersten Hydropumpe und der zweiten Hydropumpe hergestellt, wobei die zweite Hydropumpe die erste Hydropumpe als Hydraulikmotor antriebt. Dies kann dann in der entgegen gesetzten Richtung zu einer Hauptdrehrichtung der ersten Hydropumpe geschehen, so dass hierdurch die Riemenscheibe bei geöffneter Schaltkupplung entgegen der Hauptdrehrichtung angetrieben werden kann, so dass die Häckseltrommel rückwärts gedreht wird.

Eine bevorzugte Ausführungsform wird im folgenden anhand der Figuren näher erläutert. Hierin zeigt
- Figur 1: eine perspektivische Explosionsdarstellung einer Antriebsanordnung eines Feldhäckslers, und
- Figur 2: einen Teillängsschnitt des Motorabtriebsgetriebes im Bereich der Riemen- scheibe.

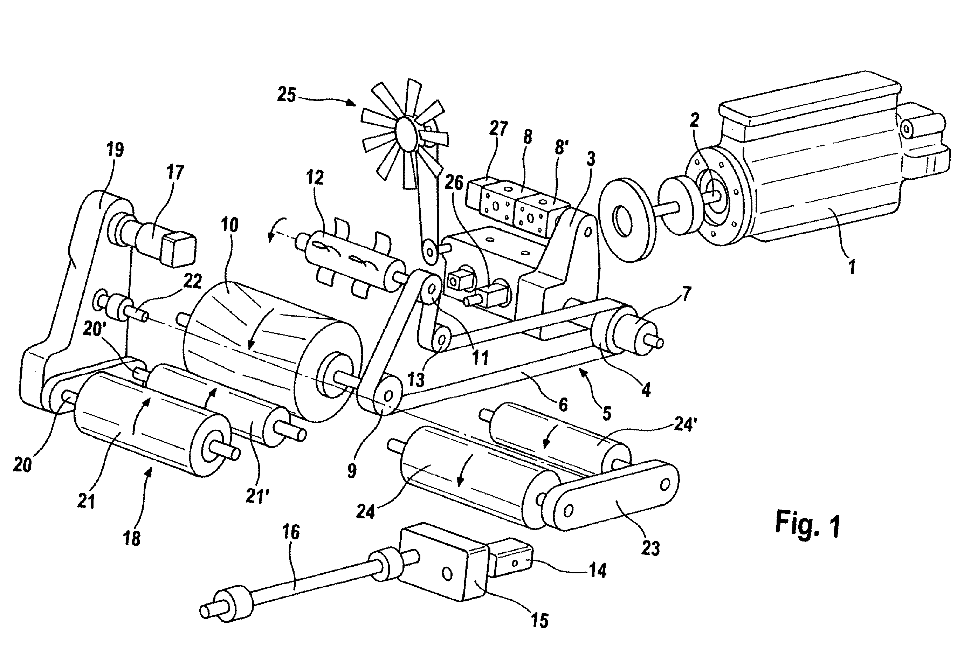

Figur 1 zeigt eine perspektivische Explosionsdarstellung eines Antriebs eines Feldhäckslers. Der Antrieb umfasst einen Antriebsmotor 1 in Form eines Verbrennungsmotors. Der Antriebsmotor 1 ist über eine Kurbelwelle 2 mit einem Motorabtriebsgetriebe 3 antriebsmäßig verbunden und treibt dieses an. Das Motorabtriebsgetriebe 3 ist als Verteilergetriebe gestaltet und treibt unter anderem eine Riemenscheibe 4 an, welche als Antriebsriemenscheibe für einen Riementrieb 5 dient und einen Riemen 6 antreibt. Die Antriebsriemenscheibe 4 kann mittels einer Schaltkupplung 7 vom Antrieb des Motorabtriebsgetriebes 3 wahlweise getrennt oder diesem zugeschaltet werden. Somit kann bei laufendem Antriebsmotor 1 der Riementrieb 5 abgeschaltet werden. Über die Schaltkupplung 7 wird ferner eine erste Hydropumpe 8 wahlweise zu- oder abgeschaltet. Hierzu ist eine Antriebswelle zum Antreiben der ersten Hydropumpe 8 und der Antriebsriemenscheibe 4 antriebsverbunden, z.B. können diese drehfest miteinander verbunden sein.

Der Riementrieb 5 umfasst ferner eine erste Abtriebsriemenscheibe 9 zum Antreiben einer Häckseltrommel 10. Die Häckseltrommel 10 dient zum Zerkleinern eines Erntegutstroms. Der Erntegutstrom wird von der Häckseltrommel 10 weiter zu einer Nachbeschleunigertrommel 12 gefördert, von wo aus das Erntegut über einen hier nicht dargestellten Auswurfkanal gefördert wird. Die Nachbeschleunigertrommel 12 wird über eine zweite Abtriebsriemenscheibe 11 des Riementriebs 5 angetrieben. Im vorliegenden Fall befindet sich die zweite Abtriebsriemenscheibe 11 im Leertrum des Riementriebs 5 zwischen der Antriebsriemenscheibe 4 und der ersten Abtriebsriemenscheibe 9. Im Leertrum befindet sich ferner, in Bewegungsrichtung des Riemens 6 betrachtet, vor der zweiten Abtriebsriemenscheibe 11 ein Riemenspanner 13 zum Spannen des Riemens 6.

Mit dieser Anordnung, insbesondere der Schaltkupplung 7, lässt sich die Häckseltrommel 10 und die Nachbeschleunigertrommel 12 beliebig vom Antrieb des Antriebsmotors 1 bzw. vom Motorabtriebsgetriebe 3 trennen oder zuschalten.

Die erste Hydropumpe 8 ist über hier nicht dargestellte Hydraulikleitungen mit einem ersten Hydromotor 14 verbunden und treibt diesen hydraulisch an. Der erste Hydromotor 14 ist mit einem Getriebe 15 antriebsverbunden, welches wiederum abtriebsseitig mit einer Gelenkwellenanordnung 16 zum Antreiben eines hier nicht dargestellten Vorsatzgerätes, z.B. einem Pick-up und/oder einem Querförderer, verbunden ist.

Da die erste Hydropumpe 8 über dieselbe Schaltkupplung 7 vom Motorabtriebsgetriebe 3 getrennt werden kann wie die Antriebsriemenscheibe 4 für den Riementrieb 5, ist gewährleistet, dass bei abgeschaltetem Riementrieb 5 auch die erste Hydropumpe 8 abgeschaltet ist und nicht vom Motorabtriebsgetriebe 3 bzw. vom Antriebsmotor 1 angetrieben wird. Somit wird bei abgeschaltetem Hauptarbeitsaggregat, nämlich der Häckseleinheit, gewährleistet, dass ungenutzte Hydropumpen nicht leer mitlaufen und Energie verbrauchen.

Die erste Hydropumpe 8 ist mit einer weiteren ersten Hydropumpe 8' verbunden. Im vorliegenden Fall handelt es sich um zwei direkt hintereinander geschaltete erste Hydropumpen 8, 8'. Grundsätzlich ist es jedoch auch denkbar, dass eine einzige erste Hydropumpe verwendet wird. Die weitere erste Hydropumpe 8' ist mit einem zweiten Hydromotor 17 zum Antreiben einer Einzugseinheit 18 verbunden. Es ist jedoch auch vorstellbar, dass die beiden ersten Hydropumpen 8, 8' in einem gemeinsamen Hydraulikkreislauf den ersten Hydromotor 14 und den zweiten Hydromotor 17 antreiben. Im vorliegenden Fall ist der zweite Hydromotor 17 über nicht dargestellte Hydraulikleitungen mit der weiteren ersten Hydropumpe 8' verbunden und wird von dieser angetrieben. Der zweite Hydromotor 17 ist antriebsmäßig mit einem ersten Einzugsgetriebe 19 verbunden. Das erste Einzugsgetriebe 19 weist mehrere Abtriebswellen 20, 20' auf, die jeweils mit einer unteren Einzugswalze 21, 21' antriebsverbunden sind und diese drehend antreiben. Über eine Gelenkwelle 22 ist das erste Einzugsgetriebe 19 zudem mit einem zweiten Einzugsgetriebe 23 verbunden, über welches obere Einzugswalze 24, 24' drehend angetrieben werden. Die Einzugseinheit 18 dient dazu, einen Erntegutstrom der Häckseltrommel 10 zuzuführen. Hierzu sind jeweils eine untere Einzugswalze 21, 21' und eine obere Einzugswalze 24, 24' paarweise angeordnet und in entgegen gesetzten Drehrichtungen angetrieben.

Auch hierbei ist gewährleistet, dass bei abgeschaltetem Riementrieb 5 die Einzugseinheit 18 abgeschaltet ist und die hierfür erforderliche erste Hydropumpe 8' nicht leer mitläuft.

Neben einer Antriebsanordnung 25 für einen Lüfter ist über das Motorabtriebsgetriebe 3 eine zweite Hydropumpe 26 angetrieben. Die zweiten Hydropumpen 26dienen als Nebenantriebe zum Beispiel für die allgemeine Bordhydraulik. Die zweite Hydropumpe 26 kann darüber hinaus über hier nicht dargestellte Hydraulikleitungen und über eine Steuerventileinheit 27 derart mit der ersten Hydropumpe 8 verbunden sein, dass, bei abgeschalteter Kupplung 7 und unterbrochener Hydraulikverbindung zwischen der ersten Hydropumpe 8 und dem ersten Hydromotor 14, die erste Hydropumpe 8 als Hydraulikmotor betrieben wird, wobei die zweite Hydropumpe 26, die auch bei abgeschalteter Schaltkupplung 7 vom Motorabtriebsgetriebe 3 angetrieben wird, die erste Hydropumpe 8 antreibt. Da die erste Hydropumpe 8 mit der Antriebsriemenscheibe 4 antriebsverbunden ist, auch wenn die Schaltkupplung 7 geöffnet ist, kann somit die Antriebsriemenscheibe 4 voll-hydrostatisch angetrieben werden. Vorzugsweise wird die Antriebsriemenscheibe 4 in einer Hauptantriebsdrehrichtung drehend vom Antriebsmotor 1 angetrieben, wobei in Figur 1 unten der Zugtrum und oben der Leertrum dargestellt ist. Wenn die erste Hydropumpe 8 als Hydraulikmotor betrieben wird und von der zweiten Hydropumpe 26 angetrieben wird, kann vorgesehen sein, dass der Riementrieb 5 in zur Hauptantriebsdrehrichtung umgekehrter Drehrichtung betrieben wird, so dass das Leertrum des Riementriebs 5 zum Zugtrum und das Zugtrum zum Leertrum wird. Die Häckseltrommel 10 wird somit in entgegen gesetzter Richtung angetrieben, als dies der Fall ist, wenn die Schaltkupplung 7 geschlossen ist und der Riementrieb 5 vom Antriebsmotor 1 über das Motorabtriebsgetriebe 3 und die geschlossene Kupplung 7 angetrieben wird. In einigen Anwendungsfällen kann dies von Vorteil sein, z.B. zum Schleifen der Klingen der Häckseltrommel 10.

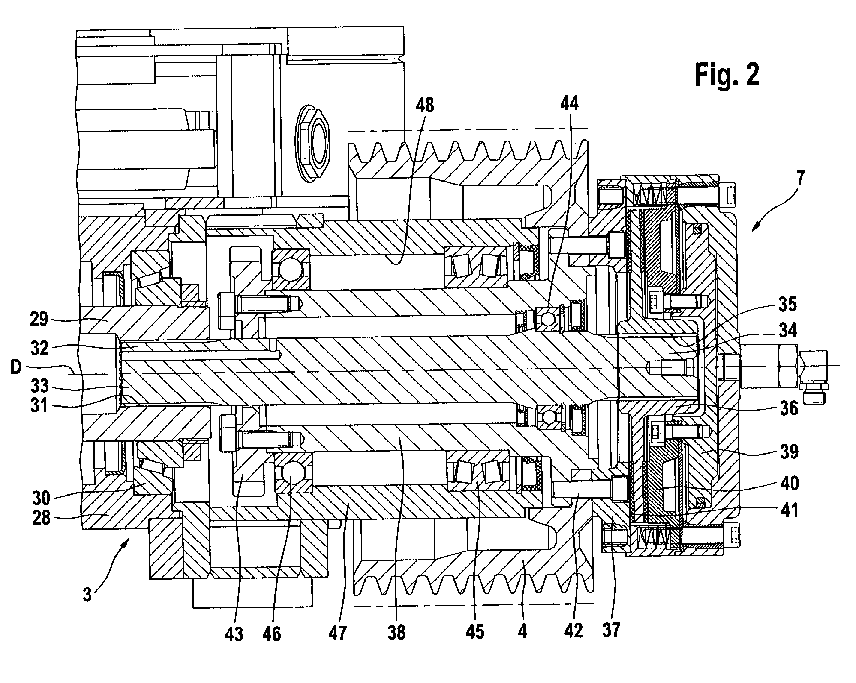

Figur 2 zeigt einen Ausschnitt des Motorabtriebsgetriebes 3 im Längsschnitt. In einem Getriebegehäuse 28 des Motorabtriebsgetriebes 3 ist eine Abtriebswelle 29 um eine Drehachse D gelagert, wobei in Figur 2 für die Lagerung ein Wälzlager 30 dargestellt ist. An einem anderen Ende der Antriebswelle 29 ist diese ebenfalls über ein Wälzlager im Getriebegehäuse 28 gelagert. Die Antriebswelle 29 ist als Hohlwelle gestaltet und weist an einem aus dem Getriebegehäuse 28 vorstehenden Ende eine Bohrung 31 mit einer Längsverzahnung auf. In die Bohrung 31 ist ein Wellenzapfen 32 mit einem ersten Ende 33, welches eine zur Längsverzahnung der Bohrung 31 entsprechende Längsverzahnung aufweist, eingesteckt. Der Wellenzapfen 32 ist an einem dem ersten Wellenende 33 entfernten zweiten Wellenende 34 ebenfalls außen mit einer Längsverzahnung versehen und mit dem zweiten Ende 34 in eine Bohrung 35 eines ersten Kupplungselements 36 der Schaltkupplung 7 eingesteckt und drehfest verbunden. Zur drehfesten Verbindung weist die Bohrung 35 des ersten Kupplungselements 36 ebenfalls eine entsprechende Längsverzahnung auf. Das erste Kupplungselement 36 ist als Reibscheibe ausgebildet und ist in Reibkontakt zum zweiten Kupplungselement 37 gehalten. Hierzu dient ein Kolben 39, der hydraulisch oder pneumatisch beaufschlagbar ist und über eine Druckplatte 40 das erste Kupplungselement 36 gegen eine Reibfläche 41 des zweiten Kupplungselements 37 presst. Bei Beaufschlagung des Kolbens 39 kann somit eine drehfeste Verbindung zwischen dem ersten Kupplungselement 36 und dem zweiten Kupplungselement 37 hergestellt werden. Ist der Kolben 39 nicht beaufschlagt, können das erste Kupplungselement 36 und das zweite Kupplungselement 37 zueinander drehen.

Das zweite Kupplungselement 37 ist über Verbindungsschrauben 42 drehfest mit der Antriebsriemenscheibe 4 in Form einer Keilriemenscheibe verbunden. Über die Verbindungsschrauben 42 ist ferner eine Hohlwelle 38 mit dem zweiten Kupplungselement 37 drehfest verbunden, wobei mit der Hohlwelle 38 an einem der Schaltkupplung 7 abgewandten Ende ein Zahnrad 43 drehfest verbunden ist. Über das Zahnrad 34 wird die erste Hydraulikpumpe, die in der vorliegenden Darstellung nicht gezeigt ist, angetrieben. Somit wird über das zweite Kupplungselement 37 gleichzeitig die Antriebsriemenscheibe 4 und die erste Hydraulikpumpe 8 angetrieben.

Die Hohlwelle 38 ist über ein Kugellager 44 auf dem Wellenzapfen 32 gelagert. Ferner ist die Hohlwelle 38 über ein Pendelrollenlager 45 und ein Kugellager 46 in einer Lagerbohrung 38 eines hülsenförmigen Lagerabschnitts 47 gelagert, wobei der Lagerabschnitt 47 fest an dem Getriebegehäuse 28 befestigt ist.

Mit der gezeigten Anordnung kann bei laufendem Antriebsmotor und bei drehender Abtriebswelle 29 des Motorabtriebsgetriebes 3 die Antriebsriemenscheibe 4 zum Antreiben der Häckseltrommel 10 und die Hohlwelle 38 zum Antreiben der ersten Hydropumpe 8 wahlweise zu- oder abgeschaltet werden. Es ist zudem ersichtlich, dass bei geöffneter Schaltkupplung 7 die erste Hydropumpe 8 als Hydromotor betrieben werden kann und hierdurch die Antriebsriemenscheibe 4 antreibt.

### Bezugszeichenliste

- 1: Antriebsmotor
- 2: Kurbelwelle
- 3: Motorabtriebsgetriebe
- 4: Riemenscheibe / Antriebsriemenscheibe
- 5: Riementrieb
- 6: Riemen
- 7: Schaltkupplung
- 8: erste Hydropumpe
- 9: erste Abtriebsriemenscheibe
- 10: Häckseltrommel
- 11: zweite Abtriebsriemenscheibe
- 12: Nachbeschleunigertrommel
- 13: Riemenspanner
- 14: erster Hydromotor
- 15: Getriebe
- 16: Gelenkwellenanordnung
- 17: zweiter Hydromotor
- 18: Einzugseinheit
- 19: erstes Einzugsgetriebe
- 20: Abtriebswelle
- 21: untere Einzugswalze
- 22: Gelenkwelle
- 23: zweites Einzugsgetriebe
- 24: obere Einzugswalze
- 25: Antriebsanordnung für Lüfter
- 26: zweite Hydropumpe
- 27: Steuerventileinheit
- 28: Getriebegehäuse
- 29: Abtriebswelle
- 30: Wälzlager
- 31: Bohrung
- 32: Wellenzapfen
- 33: erstes Wellenende
- 34: zweites Wellenende
- 35: Bohrung
- 36: erstes Kupplungselement
- 37: zweites Kupplungselement
- 38: Hohlwelle
- 39: Kolben
- 40: Druckplatte
- 41: Reibfläche
- 42: Verbindungsschraube
- 43: Zahnrad
- 44: Kugellager
- 45: Pendelrollenlager
- 46: Kugellager
- 47: Lagerabschnitt
- 48: Lagerbohrung

## Patentansprüche

1. Antriebsanordnung für eine landwirtschaftliche Arbeitsmaschine, insbesondere für einen Feldhäcksler, umfassend
ein Motorabtriebsgetriebe (3), das antriebsseitig mit zumindest einem Antriebsmotor (1) verbindbar ist,
mindestens eine erste Hydropumpe (8, 8') zum Speisen von zumindest einem Hydromotor (14, 17) zum Antreiben von Arbeitsorganen der Arbeitsmaschine, eine Riemenscheibe (4) eines Riementriebs (5), insbesondere zum Antreiben einer Häckseltrommel (10), sowie
eine Schaltkupplung (7) mit einem eingangsseitigen ersten Kupplungselement (36) und einem ausgangsseitigen zweiten Kupplungselement (37),
wobei das erste Kupplungselement (36) mit dem Motorabtriebsgetriebe (3) und das zweite Kupplungselement (37) mit der Riemenscheibe (4) antriebsverbunden ist und
wobei das zweite Kupplungselement (37) ferner mit einer Antriebswelle (38) zum Antreiben der zumindest einen ersten Hydropumpe (8, 8') drehfest verbunden ist.

2. Antriebsanordnung nach Anspruch 1,
**dadurch gekennzeichnet,**
**dass** das Motorabtriebsgetriebe (3) eine Abtriebswelle (29) aufweist, die mit dem ersten Kupplungsteil (36) drehfest verbunden ist.

3. Antriebsanordnung nach einem der Ansprüche 1 oder 2,
**dadurch gekennzeichnet,**
**dass** das zweite Kupplungselement (37) drehfest mit der Riemenscheibe (4) verbunden ist.

4. Antriebsanordnung nach einem der Ansprüche 1 bis 3,
**dadurch gekennzeichnet,**
**dass** eine Steuerventilanordnung (27) vorgesehen ist, über welche die zumindest eine erste Hydropumpe (8, 8') mit dem zumindest einen Hydromotor (14, 17) verbunden ist.

5. Antriebsanordnung nach einem der Ansprüche 1 bis 4,
**dadurch gekennzeichnet,**
**dass** die Antriebsanordnung zumindest eine zweite Hydropumpe (26) umfasst, die über die Steuerventilanordnung (27) mit der zumindest einen ersten Hydropumpe (8, 8') verbunden ist,
wobei in einer ersten Schaltstellung der Steuerventilanordnung (27) und bei geschlossener Schaltkupplung (7) die zumindest eine erste Hydropumpe (8, 8') und die zumindest eine zweite Hydropumpe (26) hydraulisch voneinander getrennt sind und die zumindest eine erste Hydropumpe (8, 8') und die Riemenscheibe (4) vom zumindest einen Antriebsmotor (1) in einer Hauptdrehrichtung angetrieben werden und
wobei in einer zweiten Schaltstellung der Steuerventilanordnung (27) und bei geöffneter Schaltkupplung (7) die zumindest eine erste Hydropumpe (8, 8') derart mit der zumindest einen zweiten Hydropumpe (26) hydraulisch verbunden ist, dass die zumindest eine erste Hydropumpe (8, 8') als Hydraulikmotor zum Antreiben des Riementriebs (5) betrieben wird und von der zumindest einen zweiten Hydropumpe (26) in einer zur Hauptdrehrichtung entgegen gesetzten Drehrichtung angetrieben wird.

6. Antriebsanordnung nach einem der Ansprüche 1 bis 5,
**dadurch gekennzeichnet,**
**dass** die Arbeitsorgane ein Vorsatzgerät zum Aufnehmen und Fördern von Erntegut umfassen.

7. Antriebsanordnung nach einem der Ansprüche 1 bis 6,
**dadurch gekennzeichnet,**
**dass** das Motorabtriebsgetriebe (3) ein Getriebegehäuse (28) aufweist, an dem die zumindest eine erste Hydropumpe (8, 8') befestigt ist.
